(19) Europäisches Patentamt
European Patent Office
Office européen des brevets

(11) **EP 2 849 538 B1**

(12) **EUROPÄISCHE PATENTSCHRIFT**

(45) Veröffentlichungstag und Bekanntmachung des Hinweises auf die Patenterteilung:
**14.11.2018  Patentblatt 2018/46**

(51) Int Cl.:
*H05B 33/08* *(2006.01)*        *H05B 41/24* *(2006.01)*

(21) Anmeldenummer: **14179996.5**

(22) Anmeldetag: **06.08.2014**

(54) **Vorrichtung und Verfahren zur indirekten Bestimmung einer elektrischen Versorgung**

Device and method for indirectly determining an electrical supply

Dispositif et procédé de détermination indirecte d'une alimentation électrique

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.08.2013  DE 102013215652**

(43) Veröffentlichungstag der Anmeldung:
**18.03.2015  Patentblatt 2015/12**

(73) Patentinhaber: **Tridonic GmbH & Co KG**
**6851 Dornbirn (AT)**

(72) Erfinder:
• **Auer, Hans**
**6850 Dornbirn (AT)**

• **Vonach, Christoph**
**6850 Dornbirn (AT)**
• **Lampert, Peter**
**6800 Feldkirch (AT)**
• **Lochmann, Frank**
**88147 Esseratsweiler (DE)**

(74) Vertreter: **Rupp, Christian**
**Mitscherlich PartmbB**
**Patent- und Rechtsanwälte**
**Sonnenstraße 33**
**80331 München (DE)**

(56) Entgegenhaltungen:
| | |
|---|---|
| WO-A1-2011/152795 | WO-A1-2012/167292 |
| DE-A1-102009 047 984 | DE-A1-102010 031 242 |
| DE-A1-102010 031 244 | DE-A1-102012 206 349 |

**Beschreibung**

Die Erfindung betrifft ein Leuchtmittelbetriebsgerät zum Betrieb wenigstens eines Leuchtmittels sowie ein Verfahren zur indirekten Erfassung einer elektrischen Versorgung eines Leuchtmittelbetriebsgeräts.

Das Leuchtmittelbetriebsgerät kann eine Leuchtmittel-Treiberschaltung, insbesondere eine LED-Treiberschaltung, sein, die eine Leistungsfaktorkorrekturschaltung und einen Wechselrichter, vorzugsweise einen Halbbrückenwechselrichter oder auch isolierten Sperrwandler, aufweist. Der Wechselrichter kann aber auch durch jede andere Form eines getakteten Schaltreglers gebildet werden, bei dem durch hochfrequente Taktung zumindest eines Schalters intern eine Wechselspannung übertragen wird. Zudem kann die Schaltung einen Filter und/oder einen Wandler aufweisen, der beispielsweise den Wechselrichter galvanisch von dem wenigstens einen Leuchtmittel trennt. Das wenigstens eine Leuchtmittel kann dabei eine LED-Strecke mit wenigstens einer LED sein. Bei dem Wandler kann es sich vorzugsweise um einen Buck-Konverter (Tiefsetzsteller) handeln, es können jedoch auch andere Wandler-Topologien wie beispielsweise Flyback-Wandler (isolierter Sperrwandler), Boost-Konverter (Hochsetzsteller) oder Buck-Boost-Konverter (Inverter-Wandler) eingesetzt werden.

Aus der WO 2012/167292 A1 ist ein Verfahren zum Betreiben eines Vorschaltgeräts für Leuchtmittel bekannt. Dabei soll der zuverlässige Betrieb über einen großen Temperaturbereich erzielt werden. Dazu misst eine Steuerschaltung des Vorschaltgeräts direkt eine Eingangsspannung und vergleicht diese mit einer Referenzspannung, um eine Leistungsabgabe an das Leuchtmittel anzupassen.

Um die indirekte Erfassung zu ermöglichen, stellt die Erfindung eine Vorrichtung und ein Verfahren gemäß den unabhängigen Ansprüchen bereit. Weiterbildungen der Erfindung sind Gegenstand der abhängigen Ansprüche.

In einem weiteren Aspekt wird ein Verfahren bereitgestellt zur indirekten Erfassung einer elektrischen Versorgung eines Leuchtmittelbetriebsgeräts mit einer Steuereinheit, die unter Verwendung wenigstens einer Rückführgröße aus dem Bereich einer Leistungsfaktorkorrekturschaltung und/oder eines Wechselrichters die elektrische Versorgung auch bei unterschiedlichen Lasten ermittelt.

Die Erfindung wird nunmehr auch mit Bezug auf die Figuren beschrieben. Dabei zeigen:

Fig. 1    eine schematische Darstellung einer Schaltungsanordnung.

Fig. 2    eine exemplarische Darstellung einer Schaltungsanordnung.

Fig. 3    ein Kennliniendiagramm.

In bekannten Leuchtmittelbetriebsgeräten wird ein elektrischer Parameter, insbesondere Busspannung $V_{bus}$ ausgewertet, um festzustellen, wann eine elektrische Versorgung Zustände annimmt, bei denen das Betriebsgerät einen bestimmten Zustand einnehmen soll, es z.B. zu deaktivieren ist.

Insbesondere wird ein Ausfall einer Netzversorgung durch eine Auswertung des elektrischen Parameters ermittelt, da keine direkte Messung der elektrischen Versorgung $V_{in}$, insbesondere einer Eingangsspannung des Leuchtmittelbetriebsgeräts, erfasst werden kann.

Der Grund hierfür ist, dass eine in dem Leuchtmittelbetriebsgerät angeordnete Steuereinheit nur eine begrenzte Anzahl von Eingängen, insbesondere von Erfassungseingängen bereitstellt und die Erfassung der elektrischen Versorgung $V_{in}$ einen zusätzlichen Erfassungseingang erfordern würde.

Ein Abschalten des Leuchtmittelbetriebsgeräts erfolgt daher in den meisten Fällen dann, wenn ein elektrischer Parameter $V_{bus}$, insbesondere die Busspannung, einen bestimmten Schwellenwert über- oder unterschreitet, und wenn diese Über- oder Unterschreitung durch die Steuereinheit erkannt wird.

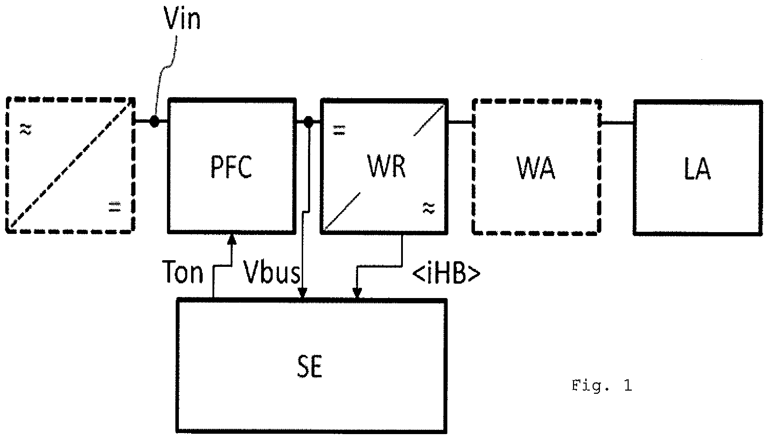

Eine schematische Schaltungsanordnung für ein Leuchtmittelbetriebsgerät ist in Fig. 1 gezeigt. Diese zeigt den optionalen Gleichrichter, der entfallen kann, wenn das Leuchtmittelbetriebsgerät bereits ausgehend von einer Gleichspannung als elektrische Versorgung $V_{in}$ betrieben wird. Wird das Leuchtmittelbetriebsgerät ausgehend von einer Wechselspannung betrieben, so kann der Gleichrichter extern oder intern zu/in dem Leuchtmittelbetriebsgerät vorgesehen sein, um die elektrische Versorgung $V_{in}$ bereitzustellen.

Die Schaltungsanordnung weist weiter eine Leistungsfaktorkorrekturschaltung PFC auf, von der Ausgehend ein Wechselrichter WR versorgbar ist. Dem Wechselrichter nachgeschaltet kann dann ein Wandler WA und/oder eine Filterkomponente folgen. Der Wechselrichter WR oder auch der Wandler WA weist dabei vorzugsweise eine Potentialtrennung auf. Insbesondere kann die Potentialtrennung auch zur Überwindung einer SELV-Barriere (SELV = Sicherheitskleinspannung) dienen. An das Leuchtmittelbetriebsgerät ist weiter eine Last LA anschließbar, die insbesondere aus wenigstens einer Leuchtmittelstrecke bestehen kann. Die Leuchtmittel der Leuchtmittelstrecke können dabei aus wenigstens einer LED oder einer Gasentladungslampe bestehen.

Die Steuereinheit SE erfasst weiter den elektrischen Parameter $V_{bus}$, der insbesondere eine Busspannung wiedergibt. Weiter erfasst die Steuereinheit SE einen Stromwert $i_{HB}$ an dem Wechselrichter, und insbesondere einen Durchschnittsstrom $<i_{HB}>$. Zudem bestimmt die Steuereinheit SE eine Einschaltzeit $T_{on}$ eines Schaltelements der Leistungsfaktorkorrekturschaltung PFC. Das Erfassen von elektrischen Parametern/Größen ist durch zur Steuereinheit SE gerichtete Pfeile verdeutlicht, während ein Einstellen der Einschaltzeitdauer ($T_{on}$-Zeit) durch einen zur Leistungsfaktorkorrekturschaltung PFC gerichteten Pfeil verdeutlicht ist.

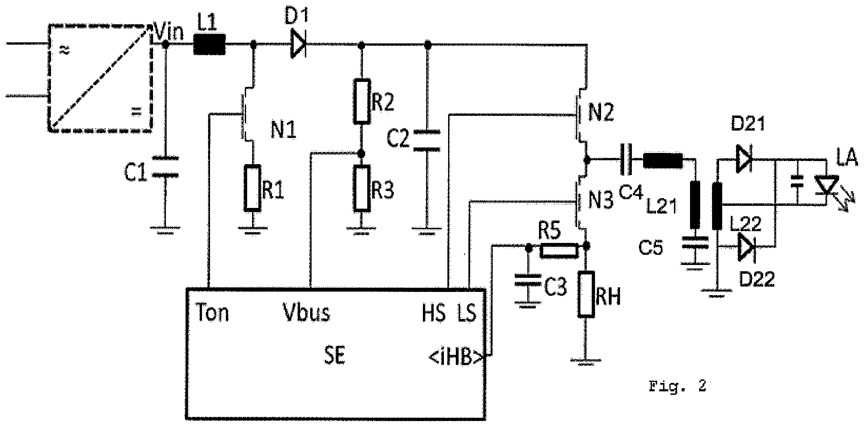

Eine erfindungsgemäße Schaltung ist nun in Fig. 2 gezeigt. Hier ist exemplarisch ein Netzspannungseingang des Leuchtmittelbetriebsgeräts gezeigt, dem ein Gleichrichter, insbesondere ein Brückengleichrichter nachgeschaltet ist, der die elektrische Versorgung $V_{in}$ erzeugt. Es kann dabei vorgesehen sein, dass das Leuchtmittelbetriebsgerät bereits direkt mit der elektrischen Versorgung $V_{in}$ versorgt ist und daher das Leuchtmittelbetriebsgerät ebenfalls ohne Gleichrichter ausgestaltet sein kann. Der Gleichrichter oder die versorgende elektrische Versorgung $V_{in}$ liefert die elektrische Versorgung für die weiteren Schaltungsbestandteile des Leuchtmittelbetriebsgeräts. Die elektrische Versorgung $V_{in}$ ist nunmehr einer Leistungsfaktorkorrekturschaltung zugeführt, der eine erste Kapazität C1 in einem ersten Querzweig in Form eines ersten Glättungskondensators vorgeschaltet ist. Eine Induktivität L1 verbindet nun den potentialhöheren Eingang der ersten Kapazität C1 mit einem weiteren Querzweig, der eine Serienschaltung eines Schaltelements N1 und eines Widerstands R1 aufweist. Das Schaltelement N1 ist dabei das Schaltelement der Leistungsfaktorkorrekturschaltung PFC und insbesondere ein Schalter bzw. ein Halbleiterschalter (Transistor, MOSFET, FET, ...).

Der Schalter der Leistungsfaktorkorrekturschaltung PFC wird von der Steuereinheit SE angesteuert. Insbesondere legt die Steuereinheit SE eine Einschaltzeitdauer $T_{on}$ und/oder eine Abschaltzeitdauer $T_{off}$ für das Schaltelement N1 fest.

An einem der Leistungsfaktorkorrekturschaltung PFC in einem noch weiteren Querzweig nachgeschalteten Spannungsteiler, der einen potentialhöheren Widerstand R2 und einen potentialniedrigeren Widerstand R3 in Serienschaltung aufweist, erfasst die Steuereinheit SE den elektrischen Parameter $V_{bus}$, der insbesondere eine Spannung widergibt. Der Spannungsteiler R2, R3 ist mit der Leistungsfaktorkorrekturschaltung PFC insbesondere über eine Diode D1 verbunden, die mit der potentialhöheren Seite des potentialhöheren Widerstands R2 des Spannungsteilers R2, R3 verbunden ist. Die Steuereinheit erfasst dabei den elektrischen Parameter $V_{bus}$ an einem Mittenpunkt zwischen dem potentialhöheren Widerstand R2 und dem potentialniedrigeren Widerstand R3.

Die Diode D1 ist insbesondere mit ihrer Anode mit der Induktivität L1 der Leistungsfaktorkorrekturschaltung verbunden und mit ihrer Kathode mit der potentialhöheren Seite des potentialhöheren Widerstands R2.

Der elektrische Parameter $V_{bus}$ wird nunmehr, insbesondere über eine weitere Kapazität C2, insbesondere einem weiteren Glättungskondensator, einem Wechselrichter zugeführt, wobei der potentialhöhere Eingang der Kapazität C2 mit der Diode D1 verbunden ist. In der exemplarischen Schaltungsdarstellung aus Fig. 2 ist der Wechselrichter als Halbbrückenwechselrichter mit einem ersten Wechselrichterschaltelement N2 und einem zweiten Wechselrichterschaltelement N3 ausgestaltet. Vorzugsweise weist der Wechselrichter weitere elektrische Bauteile wie beispielsweise einem hier dargestellten Resonanzkreis auf. In diesem Beispiel weist der Wechselrichter weiterhin ein Resonanzkondensator C4 und einen Koppelkondensator C5 sowie eine Induktivität L2 auf, wobei diese Induktivität durch in diesem Fall durch eine Primärwicklung L21 und eine mit der Primärwicklung L21 gekoppelte Sekundärwicklung L22 gebildet wird. Alternativ kann aber auch ein nichtresonanter Ausgangskreis vorhanden sein, bei dem ein sogenannter hart geschalteter Betrieb durchgeführt wird, beispielsweise unter Einsatz auch eines Kondensators und einer Induktivität, beispielsweise mit Potentialtrennung in Form eines Transformators. Beide Wechselrichterschaltelemente N2, N3 können ebenfalls von der Steuereinheit SE angesteuert werden, insbesondere, um die für die Last LA bereitgestellte Ausgangsleistung einzustellen.

Die an einem Mittenpunkt zwischen dem potentialniedrigeren Wechselrichterschalter N3 und dem potentialhöheren Wechselrichterschalter N2 erzeugte Wechselspannung wird über den Resonanzkreis (L21, L22, C4, C5) entweder direkt über einen Ausgangsgleichrichter (D21, D22) oder optional über einen zwischengeschalteten Wandler der Leuchtmittelstrecke/Last LA zugeführt. Der Wechselrichter kann beispielsweise potentialgetrennt ausgeführt sein, also eine Potentialtrennung aufweisen. Diese Potentialtrennung kann beispielsweise durch einen Transformator realisiert werden, also eine Primärwicklung L21 und eine Sekundärwicklung L22 wie in der Fig. 2 dargestellt. Am Ausgang des Wechselrichters kann ein Ausgangsgleichrichter angeordnet sein, beispielsweise in Form eines Mittelpunktgleichrichters, wie durch die beiden Gleichrichterdioden D21 und D22 in Fig. 2 beispielhaft gezeigt, eines Einweggleichrichters oder eines Brückengleichrichters. Am Ausgang des Wechselrichters kann dann über den Ausgangsgleichrichter die Leuchtmittelstrecke versorgt werden, wobei weitere elektrische Bauteile vorgesehen sein können, vorzugsweise Bauteile die einen von der Leuchtmittelstrecke benötigten Gleichstrom und eventuell eine Filterfunktion bereitstellen.

Ausgehend von dem optionalen Wandler kann auch die Leuchtmittelstrecke versorgt werden, wobei in dem Wandler weitere elektrische Bauteile vorgesehen sein können, vorzugsweise um den von der Leuchtmittelstrecke benötigten Gleichstrom einzustellen und diesen vorzugsweise möglichst zu regeln. Bei dem Wandler kann es sich vorzugsweise um einen Buck-Konverter (Tiefsetzsteller) handeln, es können jedoch auch andere Wandler-Topologien wie beispielsweise Flyback-Wandler (isolierter Sperrwandler), Boost-Konverter (Hochsetzsteller) oder Buck-Boost-Konverter (Inverter-Wandler) eingesetzt werden. Der Wandler kann auch so ausgelegt sein, dass er den Wechselrichter von der Leuchtmittelstrecke potentialtrennt, also eine Potentialtrennung zwischen dem Wechselrichter und der Leuchtmittelstrecke/Last LA bereitstellt. Eine derartige Potentialtrennung im Wandler kann beispielsweise durch den Einsatz eines Flyback-Wandler (isolierter Sperrwandler) oder eines isolierten SEPIC-Wandlers realisiert werden.

Die Steuereinheit SE steuert einerseits die Wechselrichterschaltelemente N2, N3 an, ist aber weiter dazu eingerichtet, an einem dem potentialniedrigeren Wechselrichterschaltelement N3 nachgeschalteten Messwiderstand (RH, Shunt) einen Strom $i_{HB}$ durch das potentialniedrigere Wechselrichterschaltelement N3 zu bestimmen. Dies erfolgt über den Widerstand R5 und insbesondere über einer dritte Kapazität C3, die parallel zu den Messwiderstand RH verbunden ist. Der Widerstand R5 verbindet die potentialhöheren Seiten der dritten Kapazität C3 und des Messwiderstands RH. Die dritte Kapazität C3 dient insbesondere dazu, einen Durschnittstrom $<i_{HB}>$ zu erzeugen, so dass Durch die Steuereinheit SE ein Durchschnittsstrom durch den potentialniedrigeren Wechselrichterschalter erfasst wird. Die dritte Kapazität C3 ist dabei optional. Eine Berechnung eines Durchschnittsstroms kann auch in der Steuereinheit SE (ASIC, Mikrokontroller, IC, ...) aus einer Anzahl erfasster Werte (wenigstens zwei Werte) ermittelt werden.

Eine geringere bzw. zu geringe Netzversorgung kann durch alleinige Messung des elektrischen Parameters $V_{bus}$ indessen nicht bestimmt werden, was dazu führt, dass ein gleichförmiges Abschalten des Leuchtmittelbetriebsgeräts bei veränderter Last LA bzw. in Dimmanwendungen nicht erfolgen kann. So kann beispielsweise ein Leuchtmittelbetriebsgerät, das normalerweise bei geringer/niedriger Netzversorgung abschaltet, bei einer Änderung der Last LA, insbesondere bei einer Verringerung der Last LA, nicht länger abschalten, da die Leistungsfaktorkorrekturschaltung den elektrischen Parameter $V_{bus}$ davon abhält, einen Erkennungsschwellenwert für das Vorliegen einer geringen/niedrigen Netzversorgung zu erkennen. Dies kann zu einem nicht optimalen Betrieb des Leuchtmittelbetriebsgeräts führen.

Der Gedanke der Erfindung ist, dass die Netzversorgung bzw. ihr Zustand eben nicht direkt sondern indirekt ermittelt wird, und insbesondere durch die Steuereinheit SE berechnet wird. Dadurch ist es nicht nötig, eine Steuereinheit mit einem zusätzlichen Erfassungseingang (PIN) zu verwenden, sondern die bisherige Steuereinheit kann weiter verwendet werden.

Insbesondere wird erfindungsgemäß im Wesentlichen der elektrische Parameter $V_{bus}$ und ein Durchschnittswert des Halbbrückenstroms $i_{HB}$ durch das potentialniedrigere Wechselrichterschaltelement N3 bestimmt und insbesondere auch die sich einstellende Einschaltzeitdauer des Schaltelements N1 der Leistungsfaktorkorrekturschaltung.

Die Einschaltzeitdauer ($T_{on}$-Zeit) des Schaltelements N1 der Leistungsfaktorkorrekturschaltung stellt sich dabei durch eine Regelschleife ein, die in der Steuereinheit bereits (separat) implementiert ist.

Die $T_{on}$-Zeit des Schaltelements N1 stellt sich dabei ein durch die Regelschleife: Messung des den Wechselrichter versorgenden elektrischen Parameters

$V_{bus}$, z.B. einer Busspannung, und Regelung des elektrischen Parameters $V_{bus}$ auf einen Sollwert durch Veränderung der Einschaltzeitdauer $T_{on}$ des Schaltelements N1. Somit wird abhängig von dem erfassten elektrischen Parameter $V_{bus}$ die $T_{on}$-Zeit der Schaltelements N1 eingestellt.

Gemäß der Erfindung wird nun diese erfasste Information verwendet, um abhängig von ggf. unzulässigen Zuständen der elektrischen Versorgung $V_{in}$ (z.B. einer Unterspannung), die beispielsweise zu einem zu hohen Strom führen könnte, Schutzmaßnahmen zu ergreifen. Insbesondere können die Schutzmaßnahmen in einem Abschalten des Leuchtmittelbetriebsgeräts resultieren, um eine Strombegrenzung zu erreichen.

Die Erfindung bestimmt dabei die elektrische Versorgung $V_{in}$, die insbesondere eine dem Leuchtmittelbetriebsgerät zugeführte Eingangsspannung ist, aus einem Durchschnittsstrom $<i_{HB}>$ durch den Wechselrichter, der ein Indikator für die Ausgabeleistung des Wechselrichters ist.

Änderungen in der Ausgabeleistung des Wechselrichters schlagen sich daher in dem Durchschnittsstrom $<i_{HB}>$ nieder, besonders solche, die durch eine Änderung der Last LA, also besonders einer Änderung der/an der Leuchtmittelstrecke entstehen. Die Einschaltzeitdauer $T_{on}$ des Schaltelements N1 zeigt dabei indirekt, eingestellt über die Regelschleife, die elektrische Versorgung $V_{in}$ an, wenn die Ausgabeleistung bekannt ist. Daraus ergibt sich folgendes Verhältnis:

$$Vin = \sqrt{\frac{2 \times L \times Vbus \times <iHB>}{Ton}}$$

Die Steuereinheit SE steuert dabei den elektrischen Parameter $V_{bus}$ auf einen Soll-Wert und verändert dabei die Einschaltzeitdauer $T_{on}$ abhängig von der elektrischen Versorgung $V_{in}$ und Lastbedingungen an Ausgängen des Leuchtmittelbetriebsgeräts. Die Steuereinheit SE kann auch den Strom $i_{HB}$ an dem Wechselrichter, insbesondere durch die Halbbrücke, messen und dadurch die elektrischen Versorgung $V_{in}$ bestimmen.

Vorteil der Berechnung der elektrischen Versorgung $V_{in}$ ist, dass ein Eingang (PIN) an der Steuereinheit eingespart werden kann.

Bei bekannter Last ist also die Einschaltzeitdauer $T_{on}$ des Schaltelements N1 der Leistungsfaktorkorrekturschaltung PFC ein Parameter, der die elektrische Versorgung $V_{in}$ wiedergibt.

Ein besonderer Anwendungsfall der Erfindung sind dimmbare Leuchtmittelstrecken, insbesondere LED-Strecken, die sich stark in der Last LA verändern. Daher ist bei der Erfindung die Verwendung des zeitlich gemittelten Wechselrichter-/Halbbrückenstroms $<i_{HB}>$ von großer Bedeutung, da nur bei bekannter aktueller Last LA, ausgehend von der sich einstellenden Einschaltzeitdauer $T_{on}$ auf die elektrische Versorgung $V_{in}$ geschlossen werden kann.

Der Wechselrichter-/Halbbrückenstrom $i_{HB}$ ist insbesondere bei konstanter elektrischer Versorgung abhängig von der Last LA. Besonders bei niedriger Last bzw. bei gedimmten Betrieb ist die Einbeziehung des Halbbrückenstroms $i_{HB}$ so von großer Bedeutung.

Die Erfindung ist dabei jedoch nicht auf den Einsatz von LED-Leuchtmitteln beschränkt. Es kann auch vorgesehen sein, Gasentladungslampen mit dem Leuchtmittelbetriebsgerät zu versorgen. Der Halbbrückenstrom wird typischerweise mittels des Messwiderstands zwischen Masse und potentialniedrigerem Wechselrichterschaltelement N3, wie oben beschrieben, gemessen.

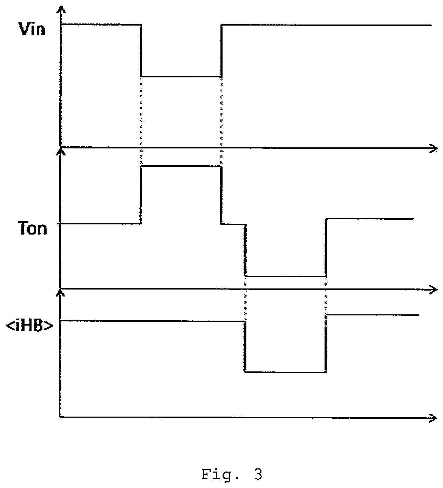

Fig. 3 zeigt nunmehr schematisch eine Ansteuerung des Schaltelements N1 in Abhängigkeit von der elektrischen Versorgung $V_{in}$ und dem Durchschnittsstrom, der an dem potentialniedrigeren Wechselrichterschaltelement N3 erfasst ist. Hier wird deutlich, dass, wenn sich die elektrische Versorgung $V_{in}$ verringert, die Leistungsfaktorkorrekturschaltung die Einschaltzeitdauer $T_{on}$ erhöht, um die zu betreibende Last LA entsprechend zu versorgen. Bei konstanter elektrischer Versorgung $V_{in}$ wird nunmehr die Steuerschaltung SE die Einschaltzeitdauer $T_{on}$ des Schaltelements N1 verringern, wenn sich die Last LA verringert.

Zusammengefasst kann also gesagt werden, dass bei niedrigerer Netzversorgung ein gleichförmiges Abschalten des Leuchtmittelbetriebsgeräts ermöglicht wird durch Bestimmung der elektrischen Versorgung $V_{in}$. Da eine direkte Bestimmung der elektrischen Versorgung $V_{in}$ nicht möglich ist, muss diese berechnet werden, insbesondere unter Verwendung des Wechselrichterstroms $i_{HB}$, dem Information über die betriebene Last LA zu entnehmen sind. Bei bekannter Ausgabeleistung ist die Einschaltzeitdauer $T_{on}$ abhängig von der elektrischen Versorgung $V_{in}$. Hierbei kann die elektrische Versorgung $V_{in}$ berechnet werden aus dem Durchschnittswechselrichterstrom $\langle i_{HB} \rangle$ und der Einschaltzeitdauer $T_{on}$.

**Patentansprüche**

1. Leuchtmittelbetriebsgerät zum Betrieb einer Last (LA), insbesondere wenigstens eines Leuchtmittels, aufweisend

   - einen Wechselrichter (WR) und
   - eine mit dem Wechselrichter (WR) verbundene versorgende Leistungsfaktorkorrekturschaltung (PFC) und eine Steuereinheit (SE), wobei der Leistungsfaktorkorrekturschaltung (PFC) eine elektrischen Versorgung (Vin) des Leuchtmittelbetriebsgeräts zugeführt wird, und wobei die Steuereinheit dazu eingerichtet ist, ein Schaltelement (N1) der Leistungsfaktorkorrekturschaltung (PFC) anzusteuern und einen von der Leistungsfaktorkorrekturschaltung (PFC) erzeugten und dem Wechselrichter(WR) zugeführten elektrischen Parameter (Vbus) als eine erste Rückführgröße zu erfassen; - wobei die Steuereinheit dazu eingerichtet ist, abhängig von dem als erste Rückführgröße erfassten elektrischen Parameter (Vbus) eine Einschaltzeitdauer (Ton) des Schaltelements (N1) der Leistungsfaktorkorrekturschaltung (PFC) einzustellen;
   - wobei die Steuereinheit dazu eingerichtet ist, unter Verwendung der ersten Rückführgröße der Leistungsfaktorkorrekturschaltung (PFC) die der Leistungsfaktorkorrekturschaltung (PFC) zugeführte elektrische Versorgung (Vin) zu ermitteln,

   **dadurch gekennzeichnet, dass** die Steuereinheit (SE) weiter dazu eingerichtet ist, einen Strom (iHB) durch eine Halbbrücke des Wechselrichters (WR) als zweite Rückführgröße zu erfassen, und die elektrische Versorgung (Vin) des Leuchtmittelbetriebsgeräts auch bei veränderter Last (LA), bspw. deren Amplitude und/oder deren Frequenz, aus dem erfassten Strom (iHB) durch den Wechselrichter (WR), der Einschaltzeitdauer (Ton) des Schaltelements (N1) der Leistungsfaktorkorrekturschaltung (PFC) und dem elektrischen Parameter(Vbus) zu ermitteln.

2. Leuchtmittelbetriebsgerät nach Anspruch 1, wobei die Steuereinheit (SE) dazu eingerichtet ist, abhängig von der ersten Rückführgröße und/oder der zweiten Rückführgröße Schutzmaßnahmen wie eine Strombegrenzung und/oder ein Abschalten des Leuchtmittelbetriebsgeräts zu veranlassen.

3. Leuchtmittelbetriebsgerät nach einem der vorgehenden Ansprüche, wobei die Leistungsfaktorkorrekturschaltung (PFC) eine Induktivität **(LI)** aufweist und wobei die Steuereinheit (SE) dazu eingerichtet ist, zur Ermittlung der elektrischen Versorgung (Vin) einen Wert der Induktivität (L1) zu verwenden.

4. Leuchtmittelbetriebsgerät nach einem der vorgehenden Ansprüche, wobei der erfasste Strom (iHB) ein Durchschnittsstrom (<iHB>), insbesondere ein zeitlich gemittelter Strom, durch den Wechselrichter (WR) ist.

5. Leuchtmittelbetriebsgerät nach Anspruch 4, wobei der Durchschnittsstrom (<iHB>) von einer an das Leuchtmittelbetriebsgerät angeschlossenen Last (LA) abhängt.

6. Leuchtmittelbetriebsgerät nach einem der vorgehenden Ansprüche, wobei das Leuchtmittelbetriebsgerät weiter einen Wandler (WA), vorzugsweise einen Buck-Konverter, aufweist.

7. Leuchtmittelbetriebsgerät nach einem der vorgehenden Ansprüche, wobei die Last eine Gasentladungslampe oder eine LED/ LED-Strecke ist.

8. Leuchtmittelbetriebsgerät nach einem der vorgehenden Ansprüche, wobei die Steuereinheit (SE) dazu eingerichtet ist, eine die Einschaltzeitdauer (Ton)des Schaltelements (Ni) in einer Regelschleife zu regeln, wobei die Steuerschaltung dazu eingerichtet ist eine Busspannung (Vbus) als elektrischen Parameter zu erfassen und die Busspannung (Vbus) auf einen Sollwert mittels Veränderung der Einschaltzeitdauer (Ton) des Schaltelements (N1) der Leistungsfaktorkorrekturschaltung (PFC) zu regeln.

9. Leuchtmittelbetriebsgerät nach einem der vorgehenden Ansprüche, wobei die Steuereinheit (SE) dazu eingerichtet ist, den Strom (iHB) an einem Messwiderstand (RH) zwischen Masse und einem potentialniedrigeren Schalter (N3) des Wechselrichters (WR) zu erfassen.

10. Leuchtmittelbetriebsgerät nach einem der Ansprüche 8 oder 9, wobei die Steuereinheit (SE) dazu eingerichtet ist, die Busspannung (VBus) an einem Spannungsteiler (R2, R3) zwischen Leistungsfaktorkorrekturschaltung (PFC) und Wechselrichter (WR) zu erfassen.

11. Leuchtmittelbetriebsgerät nach einem der vorgehenden Ansprüche, wobei die elektrische Versorgung (Vin) eine dem Leuchtmittelbetriebsgerät zugeführte gleichgerichtete Wechselspannung, insbesondere eine gleichgerichtete Netzspannung ist, die durch einen Gleichrichter gleichgerichtet ist, und wobei das Leuchtmittelbetriebsgerät den Gleichrichter umfasst.

12. Leuchtmittelbetriebsgerät nach einem der vorgehenden Ansprüche, wobei die Steuereinheit (SE) dazu eingerichtet ist, die ermittelte elektrische Versorgung (Vin) auszuwerten und eine unzulässige, insbesondere zu niedrige, elektrische Versorgung des Leuchtmittelbetriebsgeräts zu erkennen.

13. Erfassungsverfahren zur indirekten Erfassung einer elektrischen Versorgung (Vin) eines Leuchtmittelbetriebsgeräts zum Betrieb einer Last (LA), insbesondere wenigstens eines Leuchtmittels, welches einen Wechselrichter (WR), eine mit dem Wechselrichter (WR) verbunden Leistungsfaktorkorrekturschaltung (PFC) und eine Steuereinheit (SE) aufweist, wobei die Steuereinheit dazu eingerichtet ist, ein Schaltelement (N1) der Leistungsfaktorkorrekturschaltung (PFC) anzusteuern, das Erfassungsverfahren weißt folgende Schritte auf: zuführen der elektrischen Versorgung (Vin) zu der Leistungsfaktorkorrekturschaltung (PFC); erfassen einer ersten Rückführgröße, wobei ein von der Leistungsfaktorkorrekturschaltung (PFC) erzeugter und dem Wechselrichter (WR) zugeführter elektrischer Parameter (Vbus) als die erste Rückführgröße erfasst wird; einstellen einer Einschaltzeitdauer (Ton) des Schaltelements (N1) der Leistungsfaktorkorrekturschaltung (PFC) in Abhängigkeit von dem als erste Rückführgröße erfassten elektrischen Parameter (Vbus), ermitteln der elektrische Versorgung (Vin) des Leuchtmittelbetriebsgeräts unter Verwendung der ersten Rückführgröße der Leistungsfaktorkorrekturschaltung (PFC); **dadurch gekennzeichnet, dass** das Erfassungsverfahren die folgenden Schritte aufweist: erfassen einer zweiten Rückführgröße, wobei ein Strom (iHB) durch eine Halbbrücke des Wechselrichters (WR) als zweite Rückführgröße erfasst wird, ermitteln der elektrische Versorgung (Vin), bspw. deren Amplitude und/oder deren Frequenz, auch bei veränderter Last (LA) unter Verwendung der wenigstens ersten Rückführgröße, der zweiten Rückführgröße des Wechselrichters (WR), und der Einschaltzeit (Ton) des Schaltelements (N1) der Leistungsfaktorkorrekturschaltung (PFC).

**Claims**

1. A lighting-means operating device for operating a load (LA), in particular at least of one lighting means, having

   - an inverter (WR) and
   - a supplying power factor correction circuit (PFC) connected to the inverter (WR) and a control unit (SE), wherein an electrical supply (Vin) of the lighting-means operating device is fed to the power factor correction circuit (PFC), and wherein the control unit is configured to control a switching element (N1) of the power factor correction circuit (PFC) and to detect an electrical parameter (Vbus) as a first feedback variable generated by the power factor correction circuit (PFC) and fed to the inverter (WR);
   - wherein the control unit is configured, depending on the electrical parameter(Vbus) detected as first feedback variable to set a switched-on time period (tone) of the switching element (N1) of the power factor correction circuit (PFC);
   - wherein the control unit is configured, to determine the electrical supply (Vin) fed to the power factor correction circuit (PFC) using the first feedback variable of the power factor correction circuit (PFC),

   **characterized in that** the control unit (SE) is further configured to detect a current (iHB) through a half bridge of the inverter (WR) as second feedback variable, and to determine the electrical supply (Vin) of the lighting-means operating device also in the case of changed load (LA), for example, its amplitude and/or its frequency, from the detected current (iHB) through the inverter (WR), the switched-on time period (tone) of the switching element (N1) of the power factor correction circuit (PFC) and the electrical parameter (Vbus).

2. A lighting-means operating device according to Claim 1, wherein the control unit (SE) is configured to cause protective measures such as a current limitation and/or a disconnection of the lighting-means operating device depending on the first feedback variable and/or the second feedback variable.

3. A lighting-means operating device according to any one of the preceding claims, wherein the power factor correction circuit (PFC) has an inductance (LI) and wherein the control unit (SE) is configured, to use a value of the inductance (LI) for determining the electrical supply (Vin).

4. A lighting-means operating device according to any one of the preceding claims, wherein the detected current (iHB) is an average current (<iHb>), in particular, a time-averaged current, through the inverter (WR).

5. A lighting-means operating device according to Claim 4, wherein the average current (<iHB>) depends on a load (LA) connected to the lighting-means operating device.

6. A lighting-means operating device according to any one of the preceding claims, wherein the lighting-means operating device further has a converter (WA), preferably a buck converter

7. A lighting-means operating device according to any one of the preceding claims, wherein the load is a gas discharge lamp or an LED / LED series.

8. A lighting-means operating device according to any one of the preceding claims, wherein the control unit (SE) is configured to regulate the switched-on time period (tone) of the switching element (Ni) in a control loop, wherein the control circuit is configured to detect a bus voltage (Vbus) as electrical parameter and to regulate the bus voltage (Vbus) at a target value by means of changing the switched-on time period (tone) of the switching element (N1) of the power factor correction circuit (PFC).

9. A lighting-means operating device according to any one of the preceding claims, wherein the control unit (SE) is configured to detect the current (iHB) at a measuring resistor (RH) between ground and a lower-potential switch (N3) of the inverter (WR).

10. A lighting-means operating device according to any one of Claims 8 or 9, wherein the control unit (SE) is configured to detect the bus voltage (VBus) at a voltage divider (R2, R3) between power factor correction circuit (PFC) and inverter (WR).

11. A lighting-means operating device according to any one of the preceding claims, wherein the electrical supply (Vin) is an alternating voltage fed to the lighting-means operating device, in particular, a rectified mains voltage, which is rectified by a rectifier, and wherein the lighting-means operating device comprises the rectifier.

12. A lighting-means operating device according to any one of the preceding claims, wherein the control unit (SE) is configured to evaluate the detected electrical supply (Vin) and to identify an inadmissible, in particular, too low, electrical supply of the lighting-means operating device.

13. A detection method for indirectly detecting an electrical supply (Vin) of a lighting-means operating device for operating a load (LA), in particular at least a lighting means, which has an inverter (WR), a power factor correction circuit (PFC) connected to the inverter (WR) and a control unit (SE), wherein the control unit is configured to control a switching element (N1) of the power factor correction circuit (PFC), which detection method has the following steps: feed the electrical supply (Vin) to the power factor correction circuit (PFC); detect a first feedback variable, wherein an electrical parameter (Vbus) as the first feedback variable generated by the power factor correction circuit (PFC) and fed to the inverter (WR) is detected; set a switched-on time period (tone) of the switching element (N1) of the power factor correction circuit (PFC) depending on the electrical parameter (Vbus) detected as first feedback variable, determine the electrical supply (Vin) of the lighting-means operating device using the first feedback variable of the power factor correction circuit (PFC); **characterized in that** the detection method has the following steps: detect a second feedback variable, wherein a current (iHB) through a half bridge of the inverter (WR) is detected as second feedback variable, determine the electrical supply (Vin), for example, its amplitude and/or its frequency, also in the case of changed load (LA) using the at least first feedback variable, the second feedback variable of the inverter (WR), and the switched-on time (tone) of the switching element (N1) of the power factor correction circuit (PFC).

**Revendications**

1. Appareil pour faire fonctionner un moyen d'éclairage destiné à commander une charge (LA), en particulier d'au moins un moyen d'éclairage, présentant

- un onduleur (WR) et
- un circuit de correction de facteur de puissance (PFC) d'alimentation connecté à l'onduleur (WR) et une unité de commande (SE), une alimentation électrique (Vin) de l'appareil pour faire fonctionner un moyen d'éclairage étant acheminée au circuit de correction de facteur de puissance (PFC), et l'unité de commande étant agencée pour piloter un élément de commutation (N1) du circuit de correction de facteur de puissance (PFC) et pour détecter, en tant que première grandeur de réaction, un paramètre électrique (Vbus) produit par le circuit de correction de facteur de puissance (PFC) et acheminé à l'onduleur (WR) ;
- l'unité de commande étant agencée pour, en fonction du paramètre électrique (Vbus) détecté en tant que première grandeur de réaction, régler une durée de mise en circuit (Ton) de l'élément de commutation (N1) du circuit de correction de facteur de puissance (PFC) ;
- l'unité de commande étant agencée pour, en utilisant la première grandeur de réaction du circuit de correction de facteur de puissance (PFC), déterminer l'alimentation électrique (Vin) acheminée au circuit de correction de facteur de puissance (PFC),

**caractérisé en ce que** l'unité de commande (SE) est en outre agencée pour détecter, en tant que deuxième grandeur de réaction, un courant (iHB) traversant un demi-pont de l'onduleur (WR), et pour déterminer l'alimentation électrique (Vin) de l'appareil pour faire fonctionner un moyen d'éclairage également en présence d'une charge (LA) modifiée, par exemple son amplitude et/ou sa fréquence, à partir du courant (iHB) détecté traversant l'onduleur (WR), de la durée de mise en circuit (Ton) de l'élément de commutation (N1) du circuit de correction de facteur de puissance (PFC) et du paramètre électrique (Vbus).

2. Appareil pour faire fonctionner un moyen d'éclairage selon la revendication 1, l'unité de commande (SE) étant agencée pour, en fonction de la première grandeur de réaction et/ou de la deuxième grandeur de réaction, mettre en oeuvre des mesures de protection telles qu'une limitation de courant et/ou une coupure de l'appareil pour faire fonctionner un moyen d'éclairage.

3. Appareil pour faire fonctionner un moyen d'éclairage selon l'une des revendications précédentes, le circuit de correction de facteur de puissance (PFC) présentant une inductance (**LI**), et l'unité de commande (SE) étant agencée pour utiliser une valeur de l'inductance (L1) afin de déterminer l'alimentation électrique (Vin).

4. Appareil pour faire fonctionner un moyen d'éclairage selon l'une des revendications précédentes, le courant (iHB) détecté étant un courant moyen (<iHB>), en particulier un courant moyenné dans le temps, traversant l'onduleur (WR).

5. Appareil pour faire fonctionner un moyen d'éclairage selon la revendication 4, le courant moyen (<iHB>) dépendant d'une charge (LA) connectée à l'appareil pour faire fonctionner un moyen d'éclairage.

6. Appareil pour faire fonctionner un moyen d'éclairage selon l'une des revendications précédentes, l'appareil pour faire fonctionner un moyen d'éclairage comportant en outre un convertisseur (WA), de préférence un convertisseur Buck.

7. Appareil pour faire fonctionner un moyen d'éclairage selon l'une des revendications précédentes, la charge étant une lampe à décharge de gaz ou une LED/ligne de LED.

8. Appareil pour faire fonctionner un moyen d'éclairage selon l'une des revendications précédentes, l'unité de commande (SE) étant agencée pour réguler une durée de mise en circuit (Ton) de l'élément de commutation (Ni) dans une boucle de régulation, le circuit de commande étant agencé pour détecter une tension de bus (Vbus) en tant que paramètre électrique et pour réguler la tension de bus (Vbus) à une valeur de consigne au moyen d'une variation de la durée de mise en circuit (Ton) de l'élément de commutation (N1) du circuit de correction de facteur de puissance (PFC).

9. Appareil pour faire fonctionner un moyen d'éclairage selon l'une des revendications précédentes, l'unité de commande (SE) étant agencée pour détecter le courant (iHB) sur une résistance de mesure (RH) entre la masse et un commutateur (N3), de potentiel plus faible, de l'onduleur (WR).

10. Appareil pour faire fonctionner un moyen d'éclairage selon l'une des revendications 8 ou 9, l'unité de commande (SE) étant agencée pour détecter la tension de bus (Vbus) sur un diviseur de tension (R2, R3) entre le circuit de correction de facteur de puissance (PFC) et l'onduleur (WR).

11. Appareil pour faire fonctionner un moyen d'éclairage selon l'une des revendications précédentes, l'alimentation électrique (Vin) étant une tension alternative redressée, en particulier une tension du secteur redressée, acheminée à l'appareil pour faire fonctionner un moyen d'éclairage et qui est redressée par un redresseur, et l'appareil pour faire fonctionner un moyen d'éclairage comprenant le redresseur.

12. Appareil pour faire fonctionner un moyen d'éclairage selon l'une des revendications précédentes, l'unité de commande (SE) étant agencée pour analyser l'alimentation électrique (Vin) déterminée et pour identifier une alimentation électrique non admissible, en particulier trop faible, de l'appareil pour faire fonctionner un moyen d'éclairage.

13. Procédé de détection destiné à la détection indirecte d'une alimentation électrique (Vin) d'un appareil pour fonctionner un moyen d'éclairage destiné au fonctionnement d'une charge (LA), en particulier d'au moins un moyen d'éclairage, lequel comporte un onduleur (WR), un circuit de correction de facteur de puissance (PFC) connecté à l'onduleur (WR) et une unité de commande (SE), l'unité de commande étant agencée pour piloter un élément de commutation (N1) du circuit de correction de facteur de puissance (PFC), le procédé de détection comportant les étapes suivantes : acheminement de l'alimentation électrique (Vin) au circuit de correction de facteur de puissance (PFC) ; détection d'une première grandeur de réaction, un paramètre électrique (Vbus) produit par le circuit de correction de facteur de puissance (PFC) et acheminé à l'onduleur (WR) étant détecté en tant que première grandeur de réaction ; réglage d'une durée de mise en circuit (Ton) de l'élément de commutation (N1) du circuit de correction de facteur de puissance (PFC) en fonction du paramètre électrique (Vbus) détecté en tant que première grandeur de réaction, détermination de l'alimentation électrique (Vin) de l'appareil pour faire fonctionner un moyen d'éclairage en utilisant la première grandeur de réaction du circuit de correction de facteur de puissance (PFC) ; **caractérisé en ce que** le procédé de détection comporte les étapes suivantes : détection d'une deuxième grandeur de réaction, un courant (iHB) traversant un demi-pont de l'onduleur (WR) étant détecté en tant que deuxième grandeur de réaction, détermination de l'alimentation électrique (Vin), par exemple de son amplitude et/ou de sa fréquence, également en présence d'une charge (LA) modifiée, avec utilisation de la première grandeur de réaction au moins au nombre de un, de la deuxième grandeur de réaction de l'onduleur (WR), et de la durée de mise en circuit (Ton) de l'élément de commutation (N1) du circuit de correction de facteur de puissance (PFC).

Fig. 1

Fig. 2

Fig. 3

**EP 2 849 538 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2012167292 A1